# EUROPÄISCHE PATENTSCHRIFT

(11) **EP 1 173 343 B1**
(45) Veröffentlichungstag und Bekanntmachung des Hinweises auf die Patenterteilung: **12.03.2008**
(21) Anmeldenummer: 00918874.9
(22) Anmeldetag: 13.04.2000
(51) Int. Cl.: B60W 20/00, B60W 10/02, B60W 10/08, F02N 11/08

(54) **HYBRIDANTRIEB MIT SCHALTBAREN KUPPLUNGEN FÜR EIN KRAFTFAHRZEUG**
HYBRID PROPULSION SYSTEM COMPRISING SHIFTABLE CLUTCHES PROVIDED FOR A MOTOR VEHICLE
SYSTEME HYBRIDE DE PROPULSION A EMBRAYAGES COMMUTABLES POUR AUTOMOBILE

(30) Priorität: 19.04.1999 DE 19917665
(43) Veröffentlichungstag der Anmeldung: 23.01.2002
(73) Patentinhaber: ZF FRIEDRICHSHAFEN Aktiengesellschaft, 88038 Friedrichshafen (DE); Bayerische Motoren Werke Aktiengesellschaft, 80809 München (DE)
(72) Erfinder: GLONNER, Hans, D-85276 Pfaffenhofen (DE); SICH, Bernhard, D-88045 Friedrichshafen (DE); GUMPOLTSBERGER, Gerhard, D-88045 Friedrichshafen (DE); DOMIAN, Hans-Jörg, D-88090 Immenstaad (DE); DREIBHOLZ, Ralf, D-88074 Meckenbeuren (DE); KAINDL, Markus, D-85296 Rohrbach (DE); MICHAEL, Jörg, D-85055 Ingolstadt (DE)
(86) Internationale Anmeldenummer: PCT/EP2000/003321
(87) Internationale Veröffentlichungsnummer: WO 2000/063041

(56) Entgegenhaltungen:
- EP-A- 0 510 582
- EP-A- 0 698 522
- DE-A- 2 802 635
- US-A- 4 335 429
- US-A- 5 492 189
- US-A- 5 635 805

## Beschreibung

Die Erfindung betrifft einen Hybridantrieb für ein Kraftfahrzeug nach der im Oberbegriff des Patentanspruches 1 näher definierten Art.

Ein Antriebssystem für ein Kraftfahrzeug weist üblicherweise wenigstens eine elektrische Maschine auf, welche z. B. das Antriebsaggregat selbst sein kann.

Elektromotoren als Antriebsmotoren, welche von einer Batterie oder einer bordeigenen Brennstoffzelle mit elektrischer Energie gespeist werden, ermöglichen ein emissionsloses und fast geräuschloses Fahren, wobei sie in ihrer Bauart kompakt sind. Nachteilhafterweise sind die Fahrleistungen rein elektrisch angetriebener Fahrzeuge aufgrund der begrenzten zur Verfügung stehenden Speicherkapazitäten gebräuchlicher Batterien stark eingeschränkt, weshalb Elektrofahrzeuge bisher nur in Sonderbereichen Anwendung finden.

Neben rein elektrischen Antriebssystemen sind auch teilelektrische Fahrzeugantriebe bekannt, welche in der Praxis auch als "Hybrid-Antriebe" bezeichnet werden. Diese teilelektrischen Antriebssysteme weisen als Antriebsaggregat hauptsächlich einen Verbrennungsmotor auf, mit dem eine große Leistungsfähigkeit und Reichweite des Kraftfahrzeuges ermöglicht wird. Ergänzend ist wenigstens eine elektrische Maschine zwischen dem Verbrennungsmotor und dem Getriebe angeordnet, welche seriell oder parallel zum Antriebsstrang angeordnet ist und die Vorteile der Elektroantriebe, wie z. B. eine Bremsenergierückgewinnung und ein emissionsfreies Fahren bietet.

Bei Seriell-Hybriden wird in einem Fahrbereich mit begrenzter Leistung rein elektrisch gefahren, d. h. der Verbrennungsmotor und eine elektrische Maschine stehen, wobei die gesamte benötigte Energie aus einer Batterie zugeführt wird. In einem zweiten Fahrbereich wird mit dem Verbrennungsmotor gefahren, der die zweite, als Generator arbeitende elektrische Maschine antreibt, welche wiederum die Energie für den Fahrmotor im elektrischen Betrieb liefert. Derartige serielle Hybridantriebe arbeiten ohne Kupplungen mit einem ständigen Kraftschluß.

Bei Parallel-Hybriden wird mit einem mit einer Getriebeeingangswelle verbundenen Elektromotor rein elektrisch angefahren. Währenddessen steht der Verbrennungsmotor, der durch eine kraftschlüssige Kupplung von der Getriebeeingangswelle getrennt ist. Bei höherem Leistungsbedarf, z. B. ab einer bestimmten höheren Fahrgeschwindigkeit, wird der Verbrennungsmotor durch das Schließen einer Kupplung gestartet, wobei der Verbrennungsmotor dann als primäre Antriebsquelle dient. Der Elektromotor kann dann als Zusatzquelle bzw. Booster oder als Generator zum Laden der Fahrzeugbatterie verwendet werden.

Ein derartiger Parallel-Hybrid mit Verbrennungsmotor, automatisiertem Schaltgetriebe, Batterie, Wechselrichter und permanenterregter Synchronmaschine ist z. B. in der deutschen Publikation VDI-Berichte 1378 (1998), M. Lehna: "Audi duo, ein Hybridfahrzeug für die City-Logistik", 623 bis 647, beschrieben.

Nachteilig ist bei diesen bekannten Parallel-Hybriden jedoch, daß beim Schließen der Kupplung ein spürbarer Zugkrafteinbruch am Abtrieb auftritt.

Mit einem herkömmlichen Starter wird der Verbrennungsmotor auf seine Startdrehzahl gebracht, indem das Starterdrehmoment über ein Ritzel auf ein Schwungrad des Motors übertragen wird. Diese bekannten Starter sind so an einem Motorblock angeflanscht, daß bei Betätigung das Ritzel in einen Zahnkranz auf der Schwungscheibe einspurt, um den Motor darüber in Drehung zu versetzen.

Bei derartigen Startern ergibt sich des weiteren der Nachteil, daß deren Leistung unzureichend ist und ihre Lebensdauer sehr begrenzt ist.

Die begrenzte Lebensdauer macht diese Starter für einen auf die Zu- bzw. Abschaltung des Verbrennungsmotors bezogenen "Start-Stop-Betrieb" ungeeignet, wobei sich Parallel-Hybride mit einem Elektromotor zum Anfahren grundsätzlich für eine solche, den Kraftstoffverbrauch spürbar senkende Betriebsweise eignen, bei der der Verbrennungsmotor bei Fahrzeugstillstand abgeschaltet ist und nur gestartet wird, wenn er wirklich benötigt wird.

Aus der Publikation "European Automotive Design", Ausgabe April 1998, Seite 24, ist eine alternative Startereinheit bekannt, bei der ein zwischen Verbrennungsmotor und Getriebe installierter Elektromotor direkt mit der Kurbelwelle des Verbrennungsmotors verbunden ist und zusätzlich zur Starterfunktion eine Generatorfunktion hat.

Bei dieser Lösung tritt aber ebenfalls zwangsläufig ein Zugkrafteinbruch bei der Koppelung der Kurbelwelle des Verbrennungsmotors mit der Getriebeeingangswelle ein.

Eine weitere aus der Praxis bekannte Methode, den Verbrennungsmotor auf seine Startdrehzahl bzw. Leerlaufdrehzahl zu beschleunigen, ist ein der Koppelung mit der Getriebeeingangswelle vorhergehendes Starten des Verbrennungsmotors, während mit dem Elektromotor angefahren wird. Die Kupplung wird hier erst geschlossen, wenn die Differenzdrehzahl Null ist.

Bei einem einzigen hierfür zur Verfügung stehenden Elektromotor muß dieser bei stehendem Fahrzeug zunächst den Verbrennungsmotor starten, wobei das Getriebe in Neutralstellung ist und die Kupplung geschlossen ist. Während dieser Zeit kann das Fahrzeug nicht angetrieben werden. Erst wenn der Verbrennungsmotor läuft, kann die Kupplung zwischen Verbrennungsmotor und elektrischer Maschine geöffnet werden und das Getriebe in den ersten Gang schalten, woraufhin der Anfahrvorgang beginnen kann.

Nachteilhafterweise setzt somit der Anfahrvorgang mit einer deutlichen Zeitverzögerung ein.

Ein weiterer Nachteil der bekannten Hybrid-Antriebe besteht darin, daß die Hydraulikpumpe des Getriebes, welche z. B. im Getriebe integriert ist, schwierig auf eine zur Druckversorgung der Schaltelemente beim Anfahren erforderliche Drehzahl zu bringen ist, da die Hydraulikpumpe üblicherweise von dem Verbrennungsmotor angetrieben wird, welcher bei einem elektrischen Anfahren jedoch steht.

In der Praxis wird dieses Problem mit einer externen Anordnung der Hydraulikpumpe und einen Antrieb durch eine eigene Energiequelle gelöst, was sich jedoch als sehr aufwendig und kostenintensiv erweist.

Dokument EP-A-0 510 582 offenbart eine Hybridantriebsanordnung entsprechend den Merkmalen des Oberbegriffs des Anspruchs 1.

Der vorliegenden Erfindung liegt die Aufgabe zugrunde, einen Hybridantrieb für ein Kraftfahrzeug zu schaffen, bei dem die Stromversorgung des Kraftfahrzeuges und seiner Aggregate effizient ist, und bei dem auf konstruktiv einfache Weise ein rein elektrischer Antrieb bei geringem Leistungsbedarf und ein Zuschalten eines Verbrennungsmotors bei erhöhter Leistungsanforderung realisierbar ist, wobei eine Zugkraftreduzierung während des Umschaltens möglichst vermieden wird.

Erfindungsgemäß wird diese Aufgabe mit einem Hybridantrieb gemäß den kennzeichnenden Merkmalen des Patentanspruches 1 gelöst.

Mit dem erfindungsgemäßen Hybridantrieb ist in vorteilhafter Weise ein sehr ökonomischer und umweltverträglicher, rein elektrischer Betrieb bei einem Anfahren bzw. bei niedrigen Fahrzeuggeschwindigkeiten wie z. B. in einem "stop-and-go"-Betrieb oder bei einem Ein- oder Ausparkvorgang möglich. Durch Schließen der zweiten Kupplung zwischen Verbrennungsmotor und elektrischer Maschine wird der bereits laufende Verbrennungsmotor zugeschaltet, so daß die volle Fahrzeugleistung zur Verfügung steht.

Durch die erfindungsgemäße Anordnung der elektrischen Maschinen und schaltbaren Kupplungen ist der Umschaltvorgang ohne nennenswerte Zugkrafteinbußen realisierbar, da die Kopplung von Verbrennungsmotor und Getriebeeingangswelle bei einer geringen Drehzahldifferenz, welche im Optimalfall Null beträgt, durchgeführt werden kann.

Durch ihre erfindungsgemäße Einbindung in den Antriebsstrang zwischen Verbrennungsmotor und Getriebeeingangswelle bzw. zweite elektrische Maschine kann die erste elektrische Maschine vorteilhafterweise mehrfache Funktionen wahrnehmen. Sie kann als Starter für den Verbrennungsmotor oder als Generator für das elektrische System, d.h. zum Laden der Batterie oder zur Abgabe von elektrischer Leistung an andere Verbraucher sowie als Antrieb der Hydraulikpumpe des Fahrzeuggetriebes und eventuell als Antrieb weiterer Nebenaggregate wie z. B. Klimakompressor, Lenkhilfspumpe, Bremskraftverstärker oder Wasserpumpe betrieben werden.

Damit bietet die Erfindung den Vorteil, daß zahlreiche elektrische Bauteile wie z. B. Starter, Generator oder Pumpenantrieb überflüssig werden, welche bei herkömmlichen Hybridantrieben wichtige Kostenfaktoren darstellen.

Des weiteren ist mit der erfindungsgemäßen Lösung ein verbesserter Start-Stop-Betrieb möglich, da der Verbrennungsmotor während des rein elektrischen Anfahrvorganges mit der ersten elektrischen Maschine in kurzer Zeit ohne Rückwirkung auf den Abtrieb gestartet werden kann.

Ein weiterer Vorteil ist die Reaktionsverbesserung beim Anfahren mit hohem Zugkraftbedarf. Wenn bei einem elektrischen Anfahren plötzlich hoher Zugkraftbedarf besteht, z. B. am Berg oder bei Kick-Down-Betrieb, muß der Verbrennungsmotor automatisch gestartet werden. Mit der erfindungsgemäßen Anordnung, bei der mit der zweiten elektrischen Maschine angefahren werden kann und gleichzeitig der Verbrennungsmotor durch die erste elektrische Maschine gestartet und über eine rutschende Kupplung zugeschaltet werden kann, ist ein deutlicher Gewinn an Reaktionszeit erzielbar.

Dabei ergibt sich vorteilhafterweise ein sehr hohes Zugkraftangebot, welches eine Summe aus Drehmoment des Verbrennungsmotors, Drehmoment der ersten elektrischen Maschine und Drehmoment der zweiten elektrischen Maschine ist.

Die Erfindung eignet sich besonders für ein Automatgetriebe, jedoch kann sie in jeder Getriebeart Verwendung finden.

Weitere Vorteile und Weiterbildungen der Erfindung ergeben sich aus den Unteransprüchen und aus den nachfolgend anhand der Zeichnung prinzipmäßig beschriebenen Ausführungsbeispielen.
Es zeigt:
- Fig.1: eine schematische Darstellung eines Hybridantriebs für ein Kraftfahrzeug mit einer Anordnung der elektrischen Maschinen als Parallel-Hybrid und
- Fig.2: eine schematische Darstellung eines Hybridantriebs für ein Kraftfahrzeug mit einer Anordnung der elektrischen Maschinen als Seriell-Hybrid.

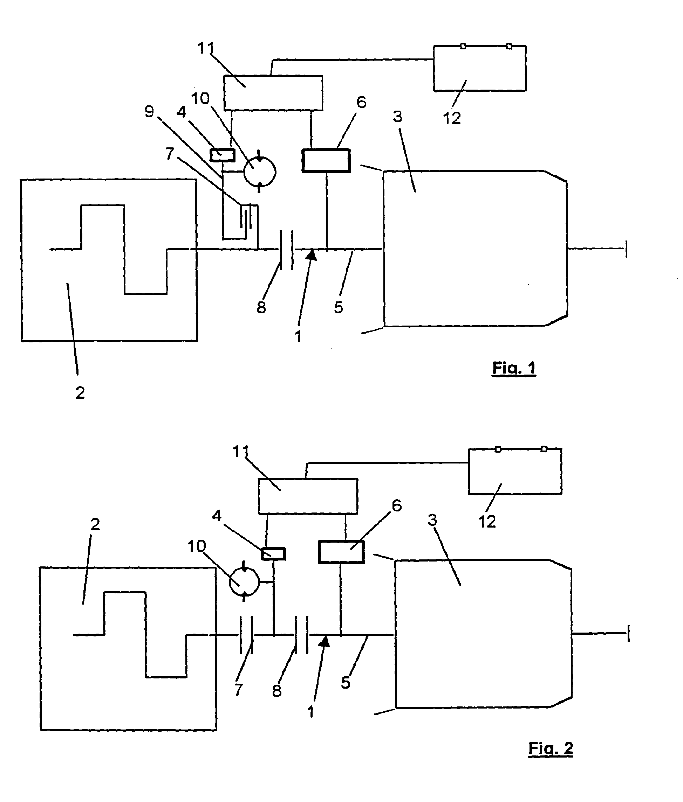

Bezug nehmend auf die Fig. 1 und 2 ist äußerst schematisch ein Hybridantrieb für ein Kraftfahrzeug mit einem Antriebsstrang 1 dargestellt, welcher zwischen einem Verbrennungsmotor 2 und einem mehrgängigem Fahrzeuggetriebe 3, welches ein Automatgetriebe darstellt, eine erste elektrische Maschine 4 und eine mit einer Getriebeeingangswelle 5 direkt und permanent verbundene zweite elektrische Maschine 6 aufweist. Zwischen den elektrischen Maschinen 4 und 6, welche jeweils als Motor und als Generator betreibbar sind, und dem Verbrennungsmotor 2 ist jeweils eine schaltbare Kupplung 7 bzw. 8 angeordnet.

In der Ausführung nach Fig. 1 ist die erste schaltbare Kupplung 7 und die erste elektrische Maschine 4 in einem von dem Antriebsstrang 1 zwischen dem Verbrennungsmotor 2 und der zweiten schaltbaren Kupplung 8 abzweigenden, parallelen Seitenstrang 9 angeordnet und bildet einen Parallel-Hybrid. Die erste elektrische Maschine 4 ist somit durch die erste Kupplung 7 und die zweite elektrische Maschine 6 ist durch die zweite Kupplung 8 von dem Verbrennungsmotor 2 getrennt.

Dagegen sind bei der einen Seriell-Hybrid darstellenden Ausführung nach Fig. 2 in dem Antriebsstrang 1 abwärts in Richtung des Fahrzeuggetriebes 3 die erste schaltbare Kupplung 7 und die erste elektrische Maschine 4, und nachfolgend die zweite schaltbare Kupplung 8 und die zweite elektrische Maschine 6 seriell angeordnet.

In beiden Ausführungen ist die erste elektrische Maschine 4 zum Starten des Verbrennungsmotors 2 vorgesehen, wobei die erste Kupplung 7 geschlossen ist oder rutscht.

Prinzipiell kann die Starterfunktion jedoch von beiden elektrischen Maschinen 4 und 6 wahrgenommen werden. Wenn der Verbrennungsmotor 2 beispielsweise sehr kalt ist, kann es eintreten, daß die erste elektrische Maschine 4, welche kleiner als die zweite elektrische Maschine 6 ausgelegt ist, nicht genügend Drehmoment zum Starten des Verbrennungsmotors 2 aufbringt, so daß die etwas stärkere zweite elektrische Maschine 6 unter einer bestimmten Temperatur zugeschaltet wird. Auf diese Weise kann stets ein ausreichendes Drehmoment aufgebracht werden, um den Verbrennungsmotor 2 zu starten.

Die zweite elektrische Maschine 6 ist primär zum elektrischen Anfahren bei abgekoppeltem Verbrennungsmotor 2 vorgesehen.

Das Anfahren ist aber auch mit der zweiten elektrischen Maschine 6 und zugeschaltetem laufenden Verbrennungsmotor 2 möglich, da der mit der ersten elektrischen Maschine 4 über die erste Kupplung 7 verbundene Verbrennungsmotor 2 während eines Anfahrvorganges bei einer Zugkraftanforderung über einem bestimmten Grenzwert mit der Getriebeeingangswelle 5 und der zweiten elektrischen Maschine 6 koppelbar ist. Hierzu wird die zweite Kupplung 8 in rutschenden Zustand geschaltet.

Mit einer derartigen Koppelung wird eine Drehmomentsummierung erreicht, wobei ein sehr großes Drehmoment zur Verfügung steht, das eine größere Anfahrleistung ermöglicht als z. B. ein Wandler mit zusätzlicher Drehmomentüberhöhung.

Bei normalem Betrieb koppelt die zweite schaltbare Kupplung 8 in den gezeigten Ausführungsvarianten den Verbrennungsmotor 2 mit der Getriebeeingangswelle 5, wenn deren Drehzahldifferenz null ist wobei kein Zugkrafteinbruch durch Starten des Verbrennungsmotors 2 auftritt.

Selbstverständlich ist auch ein Einkuppeln bei einer kleinen Drehzahldifferenz möglich. Um dies durchführen zu können, sind die Kupplungen 7, 8 im vorliegenden Ausführungsbeispiel als kraftschlüssige Kupplungen ausgeführt, bei denen die Drehzahldifferenz zunächst durch Reibung abgebaut wird.

In jeder gezeigten Ausführung ist die erste elektrische Maschine 4 direkt mit einer Hydraulikpumpe 10 des Automatgetriebes 3 verbunden. Die Hydraulikpumpe 10 ist zwischen der ersten schaltbaren Kupplung 7 und der ersten elektrischen Maschine 4 angeordnet ist. Sie wird elektrisch mit der ersten elektrischen Maschine 4 oder mechanisch mit dem Verbrennungsmotor 2 über die geschlossene erste Kupplung 7 angetrieben.

Wenn die Hydraulikpumpe 10 rein mechanisch angetrieben wird, wobei die erste Kupplung 7 geschlossen ist und ein Kraftfluß zwischen Verbrennungsmotor 2 und Hydraulikpumpe 10 besteht, treten keinerlei elektrische Wandlungsverluste und auch fast keine mechanischen Verluste auf, weshalb man einen deutlich besseren Wirkungsgrad als bei elektrischem Antrieb erhält.

Ferner bietet die gezeigte Anordnung der Hydraulikpumpe 10 den Vorteil, daß sie mit einem schmalen Drehzahlband, welches dem Hauptfahrbereich des Verbrennungsmotors 2 entspricht, betrieben werden kann. Die Hydraulikpumpe 10 kann elektrisch ohne ein Regelventil auf eine höhere Drehzahl eingestellt werden, so daß sie nur die benötigte Ölmenge fördert und damit auch kleiner dimensionierbar ist.

Dadurch, daß die Hydraulikpumpe 10 sowohl elektrisch als auch mechanisch angetrieben werden kann, ist eine Pumpenauslegung auf einen geringeren Drehzahlbereich möglich, wobei ein optimaler Betrieb mit weniger Pumpenverlusten erzielt werden kann.

Wie den Figuren 1 und 2 zu entnehmen ist, sind die elektrischen Maschinen 4, 6 über eine Leistungselektronik 11 miteinander und mit einer elektrischen Energiequelle 12, welche eine Batterie ist, verbunden.

Die erste elektrische Maschine 4 ist mit Strom aus der Batterie 12 oder über die Leistungselektronik 11 mit Strom von der zweiten elektrischen Maschine 6 betreibbar. In letzterem Fall arbeitet die zweite elektrische Maschine 6 als Generator und die zweite Kupplung 8 wird in offenen oder schlupfenden Zustand geschaltet.

Alternativ hierzu kann auch die erste elektrische Maschine 4 als Generator betrieben werden, wobei die zweite Kupplung 8 in geschlossenen oder schlupfenden Zustand geschaltet ist.

### Bezugszeichen

- 1: Antriebsstrang
- 2: Verbrennungsmotor
- 3: Fahrzeuggetriebe, Automatgetriebe
- 4: erste elektrische Maschine
- 5: Getriebeeingangswelle
- 6: zweite elektrische Maschine
- 7: erste schaltbare Kupplung
- 8: zweite schaltbare Kupplung
- 9: Seitenstrang
- 10: Hydraulikpumpe des Fahrzeuggetriebes
- 11: Leistungselektronik
- 12: Energiequelle, Batterie

## Patentansprüche

1. Hybridantrieb für ein Kraftfahrzeug mit einem Antriebsstrang (1), welcher zwischen einem Verbrennungsmotor (2) und einem Fahrzeuggetriebe (3) mit veränderbarer Übersetzung eine erste elektrische Maschine (4) und eine zweite elektrische Maschine (6) aufweist, wobei zwischen den elektrischen Maschinen (4, 6), welche jeweils als Motor und als Generator betreibbar sind,und dem Verbrennungsmotor (2) jeweils eine schaltbare Kupplung (7, 8) angeordnet ist, **dadurch gekennzeichnet, dass** die zweite elektrische Maschine (6) mit einer Getriebeeingangswelle (5) permanent verbunden ist.

2. Hybridantrieb nach Anspruch 1, **dadurch gekennzeichnet, daß** in dem Antriebsstrang (1) abwärts die erste schaltbare Kupplung (7) und die erste elektrische Maschine (4), und nachfolgend die zweite schaltbare Kupplung (8) und die zweite elektrische Maschine (6) seriell angeordnet sind.

3. Hybridantrieb nach Anspruch 1, **dadurch gekennzeichnet, daß** die erste schaltbare Kupplung (7) und die erste elektrische Maschine (4) in einem von dem Antriebsstrang (1) zwischen dem Verbrennungsmotor (2) und der zweiten schaltbaren Kupplung (8) abzweigenden, parallelen Seitenstrang (9) derart angeordnet sind, daß die erste elektrische Maschine (4) durch die erste Kupplung (7) und die zweite elektrische Maschine (6) durch die zweite Kupplung (8) von dem Verbrennungsmotor (2) trennbar sind.

4. Hybridantrieb nach einem der Ansprüche 1 bis 3, **dadurch gekennzeichnet, daß** die erste elektrische Maschine (4) mit einer Hydraulikpumpe (10) des Fahrzeuggetriebes (3) verbunden ist.

5. Hybridantrieb nach Anspruch 4, **dadurch gekennzeichnet, daß** die Hydraulikpumpe (10) zwischen der ersten schaltbaren Kupplung (7) und der ersten elektrischen Maschine (4) angeordnet ist, wobei sie mechanisch von dem Verbrennungsmotor (2) oder elektrisch von der ersten elektrischen Maschine (4) antreibbar ist.

6. Hybridantrieb nach einem der Ansprüche 1 bis 5, **dadurch gekennzeichnet, daß** die erste elektrische Maschine (4) zum Starten des Verbrennungsmotors (2) vorgesehen ist, wobei die erste Kupplung (7) geschlossen oder rutschend ist.

7. Hybridantrieb nach einem der Ansprüche 1 bis 6, **dadurch gekennzeichnet, daß** die zweite elektrische Maschine (6) für einen elektrischen Anfahrvorgang vorgesehen ist.

8. Hybridantrieb nach einem der Ansprüche 1 bis 7, **dadurch gekennzeichnet, daß** die zweite schaltbare Kupplung (8) den Verbrennungsmotor (2) mit der Getriebeeingangswelle (5) koppelt, wenn deren Drehzahldifferenz kleiner als ein vorgegebener Grenzwert ist.

9. Hybridantrieb nach Anspruch 8, **dadurch gekennzeichnet, daß** die zweite schaltbare Kupplung (8) den Verbrennungsmotor (2) mit der Getriebeeingangswelle (5) koppelt, wenn deren Drehzahldifferenz wenigstens annähernd Null ist.

10. Hybridantrieb nach einem der Ansprüche 1 bis 9, **dadurch gekennzeichnet, daß** der mit der ersten elektrischen Maschine (4) über die erste Kupplung (7) verbundene Verbrennungsmotor (2) bei einer Zugkraftanforderung über einem bestimmten Grenzwert mit der Getriebeeingangswelle (5) und der zweiten elektrischen Maschine (6) koppelbar ist, wobei die zweite Kupplung (8) in rutschenden Zustand geschaltet ist.

11. Hybridantrieb nach einem der Ansprüche 1 bis 10, **dadurch gekennzeichnet, daß** die zweite elektrische Maschine (6) unterhalb einer definierten Temperatur des Verbrennungsmotors (2) als Starter zuschaltbar ist.

12. Hybridantrieb nach einem der Ansprüche 1 bis 11, **dadurch gekennzeichnet, daß** die elektrischen Maschinen (4, 6) über eine Leistungselektronik (11) miteinander und/oder mit einer elektrischen Energiequelle (12) verbunden sind.

13. Hybridantrieb nach Anspruch 12, **dadurch gekennzeichnet, daß** die erste elektrische Maschine (4) mit Strom aus der eine Batterie (12) darstellenden Energiequelle oder über die Leistungselektronik (11) mit Strom von der zweiten elektrischen Maschine (6) betreibbar ist, wobei die zweite elektrische Maschine (6) als Generator arbeitet und die zweite Kupplung (8) in offenen oder schlupfenden Zustand geschaltet ist.

14. Hybridantrieb nach Anspruch 12, **dadurch gekennzeichnet, daß** die erste elektrische Maschine (4) als Generator betrieben ist, wobei die zweite Kupplung (8) in geschlossenen oder schlupfenden Zustand geschaltet ist.

15. Hybridantrieb nach einem der Ansprüche 1 bis 14, **dadurch gekennzeichnet, daß** als erste Kupplung (7) und /oder zweite Kupplung (8) jeweils eine kraftschlüssige Kupplung vorgesehen ist.

16. Hybridantrieb nach einem der Ansprüche 1 bis 15, **dadurch gekennzeichnet, daß** die erste elektrische Maschine (4) mit einem oder mehreren Nebenaggregaten zu deren Antrieb verbunden ist.

17. Hybridantrieb nach einem der Ansprüche 1 bis 16, **dadurch gekennzeichnet, daß** die zweite elektrische Maschine (6) eine größere Leistung als die erste elektrische Maschine (4) aufweist.

18. Hybridantrieb nach einem der Ansprüche 1 bis 17, **dadurch gekennzeichnet, daß** das Fahrzeuggetriebe als Automatgetriebe (3) ausgebildet ist.

## Claims

1. Hybrid drive for a motor vehicle having a drive train (1) which has, between an internal combustion engine (2) and a vehicle transmission (3) having an adjustable transmission ratio, a first electrical engine (4) and a second electrical engine (6), a switchable coupling (7, 8) being arranged in each case between the electrical engines (4, 6) which can each be operated as a motor and as a generator and the internal combustion engine (2), **characterised in that** the second electrical engine (6) is permanently connected to a transmission input shaft (5).

2. Hybrid drive according to claim 1, **characterised in that** in the drive train (1), in a downstream direction, the first switchable coupling (7) and the first electrical engine (4) are arranged in series, followed by the second switchable coupling (8) and the second electrical engine (6).

3. Hybrid drive according to claim 1, **characterised in that** the first switchable coupling (7) and the first electrical engine (4) are arranged in a parallel auxiliary train (9) which branches from the drive train (1) between the internal combustion engine (2) and the second switchable coupling (8) in such a manner that the first electrical engine (4) can be separated from the internal combustion engine (2) by the first coupling (7) and the second electrical engine (6) can be separated from the internal combustion engine (2) by the second coupling (8).

4. Hybrid drive according to any one of claims 1 to 3, **characterised in that** the first electrical engine (4) is connected to a hydraulic pump (10) of the vehicle transmission (3).

5. Hybrid drive according to claim 4, **characterised in that** the hydraulic pump (10) is arranged between the first switchable coupling (7) and the first electrical engine (4), the pump being able to be driven mechanically by the internal combustion engine (2) or electrically by the first electrical engine (4).

6. Hybrid drive according to any one of claims 1 to 5, **characterised in that** the first electrical engine (4) is provided for starting the internal combustion engine (2), the first coupling (7) being closed or sliding.

7. Hybrid drive according to any one of claims 1 to 6, **characterised in that** the second electrical engine (6) is provided for an electrical starting operation.

8. Hybrid drive according to any one of claims 1 to 7, **characterised in that** the second switchable coupling (8) couples the internal combustion engine (2) to the transmission input shaft (5) if the speed differential thereof is smaller than a predetermined threshold value.

9. Hybrid drive according to claim 8, **characterised in that** the second switchable coupling (8) couples the internal combustion engine (2) to the transmission input shaft (5) if the speed differential thereof is at least approximately zero.

10. Hybrid drive according to any one of claims 1 to 9, **characterised in that** the internal combustion engine (2) which is connected to the first electrical engine (4) by means of the first coupling (7) can be coupled to the transmission input shaft (5) and the second electrical engine (6) when a tractive force above a specific threshold value is required, the second coupling (8) being switched into a sliding state.

11. Hybrid drive according to any one of claims 1 to 10, **characterised in that** the second electrical engine (6) can be engaged as a starter below a defined temperature of the internal combustion engine (2).

12. Hybrid drive according to any one of claims 1 to 11, **characterised in that** the electrical engines (4, 6) are connected to each other and/or to an electrical energy source (12) by means of an electronic power unit (11).

13. Hybrid drive according to claim 12, **characterised in that** the first electrical engine (4) can be operated with electrical power from an energy source which constitutes a battery (12) or can be operated with electrical power from the second electrical engine (6) via the electronic power unit (11), the second electrical engine (6) operating as a generator and the second coupling (8) being switched into an open or slip state.

14. Hybrid drive according to claim 12, **characterised in that** the first electrical engine (4) is operated as a generator, the second coupling (8) being switched into a closed or slip state.

15. Hybrid drive according to any one of claims 1 to 14, **characterised in that** a positive-locking coupling is provided in each case as a first coupling (7) and/or second coupling (8).

16. Hybrid drive according to any one of claims 1 to 15, **characterised in that** the first electrical engine (4) is connected to one or more auxiliary unit(s) for the driving thereof.

17. Hybrid drive according to any one of claims 1 to 16, **characterised in that** the second electrical engine (6) has a higher power level than the first electrical engine (4).

18. Hybrid drive according to any one of claims 1 to 17, **characterised in that** the vehicle transmission is constructed as an automatic transmission (3).

## Revendications

1. Entraînement hybride pour un véhicule automobile possédant une chaîne cinématique (1) qui comprend, entre un moteur à combustion interne (2) et une transmission à rapport variable (3) du véhicule, une première machine électrique (4) et une seconde machine électrique (6), dans lequel un embrayage pouvant être commandé (7, 8) est interposé entre chacune des machines électriques (4, 6), qu'on peut faire travailler en moteur ou en génératrice, et le moteur à combustion interne (2), **caractérisé en ce que** la seconde machine électrique (6) est reliée en permanence à un arbre d'entrée (5) de la transmission.

2. Entraînement hybride selon la revendication 1, **caractérisé en ce que** le premier embrayage pouvant être commandé (7) et la première machine électrique (4), puis le second embrayage pouvant être commandé (8) et la seconde machine électrique (6) sont disposés en série dans la chaîne cinématique (1), en allant vers l'aval.

3. Entraînement hybride selon la revendication 1, **caractérisé en ce que** le premier embrayage pouvant être commandé (7) et la première machine électrique (4) sont disposés dans une chaîne latérale parallèle (9), qui est dérivée de la chaîne cinématique (1) entre le moteur à combustion interne (2) et le second embrayage pouvant être commandé (8), de telle sorte que la première machine électrique (4) peut être séparée du moteur à combustion interne (2) par le premier embrayage (7) et que la seconde machine électrique (6) peut être séparée du moteur à combustion interne (2) par le second embrayage (8).

4. Entraînement hybride selon l'une des revendications 1 à 3, **caractérisé en ce que** la première machine électrique (4) est reliée à une pompe hydraulique (10) de la transmission (3) du véhicule.

5. Entraînement hybride selon la revendication 4, **caractérisé en ce que** la pompe hydraulique (10) est disposée entre le premier embrayage (7) pouvant être commandé et la première machine électrique (4), cette pompe pouvant être entraînée mécaniquement par le moteur à combustion interne (2) ou électriquement par la première machine électrique (4).

6. Entraînement hybride selon l'une des revendications 1 à 5, **caractérisé en ce que** la première machine électrique (4) est prévue pour le lancement du moteur à combustion interne (2), le premier embrayage (7) étant alors fermé ou dans un état de glissement.

7. Entraînement hybride selon l'une des revendications 1 à 6, **caractérisé en ce que** la seconde machine électrique (6) est prévue pour une opération de démarrage électrique.

8. Entraînement hybride selon l'une des revendications 1 à 7, **caractérisé en ce que** le second embrayage (8) pouvant être commandé accouple le moteur à combustion interne (2) à l'arbre d'entrée (5) de la transmission lorsque la différence de vitesse de rotation de ces deux éléments est inférieure à une limite prédéterminée.

9. Entraînement hybride selon la revendication 8, **caractérisé en ce que** le second embrayage (8) pouvant être commandé accouple le moteur à combustion interne (2) à l'arbre d'entrée (5) de la transmission lorsque la différence de leurs vitesses de rotation est au moins approximativement nulle.

10. Entraînement hybride selon l'une des revendications 1 à 9, **caractérisé en ce que** le moteur à combustion interne (2) relié à la première machine électrique (4) par l'intermédiaire du premier embrayage (7) peut être accouplé à l'arbre d'entrée (5) de la transmission et à la seconde machine électrique (6) en présence d'une demande de force de traction supérieure à une limite déterminée, le second embrayage (8) étant alors commuté sur l'état de glissement.

11. Entraînement hybride selon l'une des revendications 1 à 10, **caractérisé en ce que** la seconde machine électrique (6) peut être mise en action en tant que démarreur en dessous d'une température définie du moteur à combustion interne (2).

12. Entraînement hybride selon l'une des revendications 1 à 11, **caractérisé en ce que** les machines électriques (4, 6) sont reliées l'une à l'autre et/ou à une source d'énergie électrique (12) au moyen d'une électronique de puissance (11).

13. Entraînement hybride selon la revendication 12, **caractérisé en ce que** la première machine électrique (4) peut être alimentée par du courant provenant d'une source d'énergie constituant un accumulateur (12) ou par du courant provenant de la seconde machine électrique (6) par l'intermédiaire de l'électronique de puissance (11), la seconde machine électrique (6) travaillant en génératrice et le second embrayage (8) étant commuté sur l'état ouvert ou de glissement.

14. Entraînement hybride selon la revendication 12, **caractérisé en ce que** la première machine électrique (4) est utilisée comme génératrice, le second embrayage (8) étant commuté sur l'état fermé ou glissant.

15. Entraînement hybride selon l'une des revendications 1 à 14, **caractérisé en ce que**, comme premier embrayage (7) et/ou comme second embrayage (8), il est prévu à chaque fois un embrayage opérant par action de force.

16. Entraînement hybride selon l'une des revendications 1 à 15, **caractérisé en ce que** la première machine électrique (4) est reliée à un ou plusieurs groupes accessoires pour l'entraîner ou les entraîner.

17. Entraînement hybride selon l'une des revendications 1 à 16, **caractérisé en ce que** la seconde machine électrique (6) possède une plus grande puissance que la première machine électrique (4).

18. Entraînement hybride selon l'une des revendications 1 à 17, **caractérisé en ce que** la transmission du véhicule est constituée par une boîte de vitesses automatique (3).
